# EUROPÄISCHE PATENTSCHRIFT

(11) **EP 1 967 816 B1**
(45) Veröffentlichungstag und Bekanntmachung des Hinweises auf die Patenterteilung: **12.05.2010**
(21) Anmeldenummer: 08000894.9
(22) Anmeldetag: 18.01.2008
(51) Int. Cl.: G01B 3/56, B23D 59/00, B27B 27/06, B43L 7/10

(54) **Winkelschmiege**
Sliding bevel
Fausse équerre

(30) Priorität: 06.03.2007 DE 202007003439 U
(43) Veröffentlichungstag der Anmeldung: 10.09.2008
(73) Patentinhaber: Metabowerke GmbH, 72622 Nürtingen (DE)
(72) Erfinder: Engelmann, Marcus, 49716 Meppen (DE); Vorwerk, Uwe, 49770 Herzlake (DE); Bergmann, Laurenz, 49733 Haren/Ems (DE)
(74) Vertreter: Gesthuysen, von Rohr & Eggert

(56) Entgegenhaltungen:
- EP-A- 0 952 425
- WO-A-01/16555
- IT-Z2- 224 314
- US-A- 742 528

## Beschreibung

Die Erfindung betrifft eine Winkelschmiege als Hilfsmittel zum Einstellen eines Gehrungswinkels an einer Gehrungssäge mit den Merkmalen des Oberbegriffs von Anspruch 1.

Beim Innenausbau, insbesondere mit langgestreckten Werkstücken aus Holz, beispielsweise Fußleisten, muß man beispielsweise an Raumecken, die nicht notwendigerweise einen Winkel von 90° aufweisen, den tatsächlichen Winkel aufnehmen und auf die Werkstücke übertragen. Mit einem üblichen 45°-Gehrungswinkel am Passende eines Werkstückes kann man nur dann arbeiten, wenn der tatsächlich vorhandene Winkel, an dem die beiden Enden des Werkstückes aufeinandertreffen, genau 90° beträgt.

Zum Aufnehmen eines Raumwinkels und zum Übertragen des Raumwinkels auf die Einstellung eines Gehrungswinkels an einer Gehrungssäge dient eine Winkelschmiege. Gehrungssägen der in Rede stehenden Art sind insbesondere Tischkreissägen, Kapp- und Gehrungssägen, aber auch Bandsägen, Handkreissägen oder Hand-Gehrungssägen.

Mit der Winkelschmiege möchte man erreichen, daß das Sägewerkzeug, insbesondere und typischerweise ein Sägeblatt, die richtige Ausrichtung zum zu bearbeitenden Werkstück hat, um dieses mit dem entsprechenden Winkel abzuschneiden. Dazu weist eine solche Gehrungssäge regelmäßig eine Anschlagschiene auf. Steht die Anschlagschiene fest, so ist regelmäßig das Sägeaggregat mittels eines Drehtellers relativ zur Anschlagschiene auf den gewünschten Gehrungswinkel drehbar. Steht das Sägeaggregat fest, so läßt sich regelmäßig die Anschlagschiene in ihrer Winkelstellung verändern (EP-B-0 994 766).

Bekannt ist es in diesem Zusammenhang bereits, eine besonders zweckmäßige Konstruktion der Winkeleinstellung der Anschlagschiene zu verwirklichen, so daß auch langgestreckte Werkstücke aus Holz, beispielsweise Fußleisten, optimal auf Gehrung geschnitten werden können (DE-U-20 2006 012 418).

Eine bekannte Winkelschmiege (US-B-6,401,584, ähnlich auch EP-B-1 189 735) hat bereits eine doppelte Funktion. Sie erlaubt es nicht nur, den tatsächlich vorhandenen Winkel im Raum richtig aufzunehmen. Sie erlaubt es auch, den aufgenommenen Winkel ohne die Notwendigkeit von Umrechnungen direkt an der Gehrungssäge einzustellen.

Die beispielsweise an einer Raumecke zueinander eingestellten Anlagelineale behalten ihre Relativlage durch Reibung bei. Der Ausrichtsteg zeigt dabei die Winkelhalbierende der Winkelschmiege an. Zum Übertragen des aufgenommenen Winkels auf die Gehrungssäge muß man nur (bei einer Gehrungssäge mit Sägeaggregat an einem Drehteller) ein Anlagelineal an die Anschlagschiene legen und dann das Sägeaggregat mittels des Drehtellers so drehen, daß das Kreissägeblatt genau mit der Ausrichtlinie auf dem Ausrichtsteg fluchtet, also ausgerichtet ist. Wegen der Kürze des Ausrichtstegs und der reinen Sichtkontrolle zum Ausrichten des Sägeaggregates ergeben sich bei dieser Winkelschmiege aber in der Praxis doch häufig große Winkelfehler.

Die bekannte, zuvor erläuterte Winkelschmiege erreicht die Ausrichtung des Ausrichtsteges stets in der Winkelhalbierenden dadurch, daß der Ausrichtsteg auf zwei voneinander beabstandeten Anlenkpunkten der beiden Anlagelineale ausgerichtet ist. Jedes Anlagelineal hat zwei miteinander über Nut-Feder-Schiebeführungen verbundene, plattenartige Linealteile. Diese sind gewissermaßen über Kreuz an den Anlenkpunkten miteinander schwenkbar verbunden. Im Ergebnis sind somit die beiden Anlagelineale mit ihren beiden Linealteilen nach Art eines Parallelogramms miteinander gekoppelt.

Eine Parallelogrammkopplung ist auch aus den Dokumenten US 742 528 und WO 01/16555 ersichtlich.

Die Parallelogrammkopplung als solche ist an sich zweckmäßig, weil sie anders als ein Zahnradgetriebe praktisch spielfrei ausgeführt werden kann. Problematisch ist bei dieser Winkelschmiege jedoch die Kombination mit Nut-Feder-Schiebeführungen, die konstruktiv aufwendig sind und in der Praxis zum Verklemmen neigen. Deshalb wird dort auch bereits an besondere Maßnahmen zum Schutz gegen Verschmutzung erinnert.

Berücksichtigt man, daß eine Winkelschmiege der in Rede stehenden Art als Hilfsmittel zum Einstellen eines Gehrungswinkels an einer Gehrungssäge im täglichen Gebrauch in der Werkstatt oder auf einer Baustelle sehr beansprucht wird und Staub und Schmutz ausgesetzt ist, besteht weiterhin Bedarf an einer möglichst einfach konstruierten, zuverlässigen und eine einfache Übertragung auf die Gehrungssäge erlaubenden Winkelschmiege.

Eine aus der Praxis bekannte Winkelschmiege (HEDÜ Winkelschmiege W101) ist einfach konstruiert und zuverlässig. Eine Übertragung des erfaßten Winkels auf die Gehrungssäge erfolgt allerdings nur durch Ablesen des erfaßten Winkels und Einstellen dieses Winkels an der Gehrungssäge.

Zweckmäßig ist an der zuvor genannten Winkelschmiege, daß der Ausrichtsteg ein langgestreckter, eigenständiger dritter Arm ist, der wie die Anlagelineale am Schwenkgelenk gelagert ist. Hier ist das Grundprinzip einer Parallelogrammkopplung von Hebeln konsequent umgesetzt, indem an jedem Anlagelineal mit erheblichem Abstand vom Winkelscheitel ein Koppelhebel mit seinem einen Ende schwenkbar angelenkt ist. Die beiden Koppelhebel sind an ihren anderen Enden sowohl miteinander als auch mit dem Ausrichtsteg gelenkig gekoppelt, und zwar an einem Koppelpunkt, der am Ausrichtsteg in Längsrichtung des Ausrichtstegs, also auf den Winkelscheitel zu oder von dem Winkelscheitel weg verstellbar ist. Damit stehen die Anlagelineale symmetrisch in einer bestimmten Relativlage zum Ausrichtsteg, der Ausrichtsteg nimmt immer die Lage in der Winkelhalbierenden ein.

Eine direkte Übertragung des erfaßten Winkels von der Winkelschmiege auf die Gehrungssäge ohne das Ablesen eines erfaßten Winkels und Einstellen dieses Winkels an der Gehrungssäge erlaubt die bekannte mechanische Winkelschmiege, von der die Erfindung ausgeht (IT 224 314 Z2 und EP 0 952 425). Neben den beiden Anlagelinealen, den Koppelhebeln und dem in der Winkelhalbierenden liegenden Ausrichtsteg hat diese Winkelschmiege noch einen doppellagigen Klemmhebel mit einer Fixierschraube. Dieser dient der Fixierung des erfaßten Winkels. Zum Übertragen des erfaßten Winkels auf die Gehrungssäge wird das komplette, schwenkgelenkig miteinander verbundene Parallelogramm aus Anlagelinealen und Koppelhebeln von der durch Klemmung fixierten Einheit aus Ausrichtsteg und Klemmhebel abgenommen. Dann ist die vom Klemmhebel abgewandte Seite des Ausrichtstegs frei und kann genutzt werden, um die Übertragung des erfaßten Winkels auf die Gehrungssäge durchzuführen.

Der konstruktive und handhabungstechnische Aufwand bei der bekannten Winkelschmiege ist relativ groß, so daß der Lehre das Problem zugrunde liegt, die bekannte Winkelschmiege, die ein direkte Übertragung des erfaßten Winkels auf die Gehrungssäge ermöglicht, konstruktiv und handhabungstechnisch noch einfacher zu gestalten.

Die zuvor aufgezeigte Problemstellung ist gelöst bei einer Winkelschmiege mit den Merkmalen des Oberbegriffs von Anspruch 1 durch die Merkmale des kennzeichnenden Teils von Anspruch 1.

Erfindungsgemäß ist erkannt worden, daß eine Fixierbarkeit des Koppelpunkts in der jeweiligen Stellung am Ausrichtsteg dazu führt, daß der Ausrichtsteg selbst genutzt werden kann, um die Übertragung des erfaßten Winkels auf die Gehrungssäge durchzuführen.

Durch die Länge des Ausrichtstegs läßt sich dieser nach Aufnehmen des Winkels mittels der Winkelschmiege ohne weiteres präzise auf die Ebene des Sägewerkzeugs, insbesondere des Sägeblattes ausrichten. Mit der erfindungsgemäßen Ausführung kann man eine mechanische Ausrichtung des Sägewerkzeugs entlang des Randes des Ausrichtstegs realisieren. Durch Entfernen eines Anlagelineals samt Koppelhebel wird der zugeordnete Rand des Ausrichtstegs frei zugänglich. Dieser Rand kann seitlich an das Sägeblatt angelegt werden, so daß im Ergebnis das bestehende, fixierte Anlagelineal an der Anschlagschiene liegt und der Rand des Ausrichtstegs am Sägewerkzeug, insbesondere am Sägeblatt anliegt. Damit ist die Ausrichtung fehlerfrei möglich.

Ist das lösbare Anlagelineal mit seinem Koppelhebel tatsächlich nur vom Koppelpunkt lösbar und muß dann auf den Ausrichtsteg eingeschwenkt werden, so empfiehlt es sich, daß der Ausrichtsteg breiter ist als das Anlagelineal mitsamt dem Koppelhebel. Dann ist der Rand des Ausrichtstegs ohne weiteres frei zugänglich zu halten.

Grundsätzlich wäre es möglich, am Ausrichtsteg in Längsrichtung mehrere Bohrungen hintereinander anzuordnen, die typischen Winkeln der Anlagelineale zueinander entsprechen. Da aber in der Praxis unterschiedlichste Winkel aufgenommen werden müssen, empfiehlt es sich, daß der Koppelpunkt am Ausrichtsteg stufenlos verstellbar und fixierbar ist. Insbesondere kann man vorsehen, daß der Ausrichtsteg einen in Längsrichtung verlaufenden Schlitz aufweist, in dem der Koppelpunkt stufenlos verstellbar und fixierbar ist. Es gibt dazu natürlich viele Varianten, die im Prinzip das Gleiche leisten.

Grundsätzlich ist es zweckmäßig, die Koppelhebel an den Anlagelinealen an einer bestimmten Stelle festzulegen. Um in der Praxis mit einer Winkelschmiege sehr unterschiedliche Winkel aufnehmen zu können, kann es sich aber auch empfehlen, für die Koppelhebel jeweils mehrere Anlenkpunkte an den Anlagelinealen vorzusehen, um unterschiedliche Winkelbereiche erfassen zu können.

Um beim Verstellen des Koppelpunkts für beide Anlagelineale genau dieselbe Verstellung zu realisieren, also die Ausrichtung in der Winkelhalbierenden für den Ausrichtsteg sicher zu gewährleisten, empfiehlt es sich, daß die den beiden Anlagelinealen zugeordneten Koppelhebel gleich lang sind und in gleichen Abständen vom Winkelscheitel an den Anlagelinealen angelenkt sind.

Der Koppelpunkt wird üblicherweise als Rändelschraube auf einem Gewindebolzen realisiert werden können, aber auch eine Flügelschraube oder ein Schnellspannhebel sind mögliche Ausführungen des Koppelpunktes.

Im folgenden wird die Erfindung anhand einer lediglich ein bevorzugtes Ausführungsbeispiel darstellenden Zeichnung näher erläutert. In der Zeichnung zeigt
- Fig. 1: in Draufsicht ein bevorzugtes Ausführungsbeispiel einer erfindungsgemäßen Winkelschmiege beim Aufnehmen eines Winkels vor Ort und
- Fig. 2: die Winkelschmiege aus Fig. 1 vorbereitet zum Einstellen des Gehrungswinkels an einer Gehrungssäge.

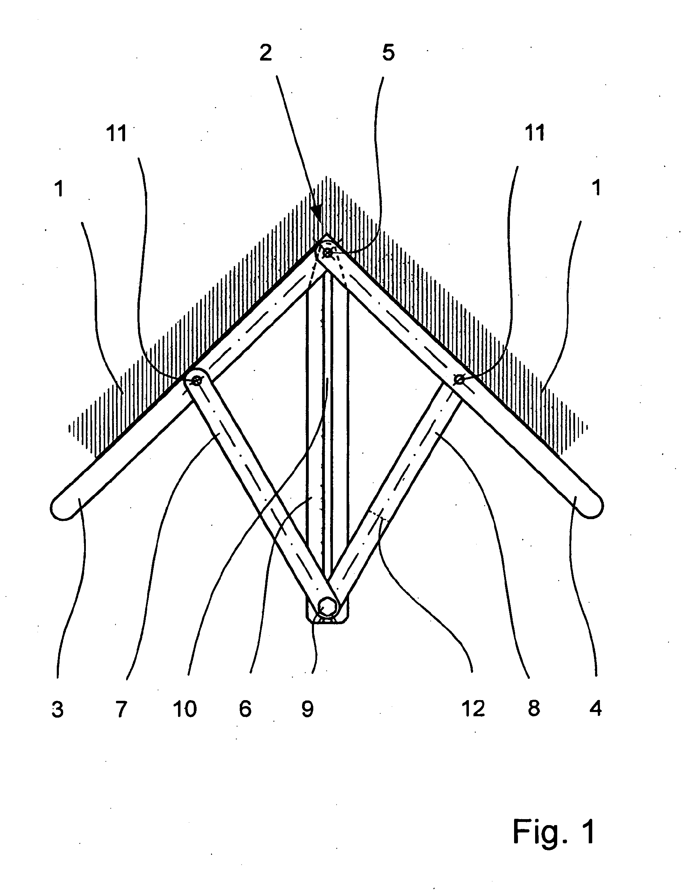

Fig. 1 zeigt zwei Wände 1 eines Raumes, die an einer Raumecke 2 zusammenstoßen. Zum Aufnehmen des dortigen Winkels dient die erfindungsgemäße Winkelschmiege. Sie ist ein Hilfsmittel zum Einstellen eines Gehrungswinkels an einer Gehrungssäge. Dieser Gehrungswinkel kann dann an einem langgestreckten Werkstück, beispielsweise einer Fußleiste, realisiert werden. Die an der Raumecke 2 aufeinandertreffenden Fußleisten sind endseitig mit dem richtigen Gehrungswinkel geschnitten und schmiegen sich perfekt aneinander.

Die dargestellte Winkelschmiege weist ein erstes Anlagelineal 3 und ein zweites Anlagelineal 4 auf. Das zweite Anlagelineal 4 ist an einem Ende hier mittels eines Schwenkgelenkes 5 mit dem ersten Anlagelineal 3 schwenkbar verbunden. Damit wird vom Überlappungsbereich der beiden Anlagelineale 3, 4 der Winkelscheitel der Winkelschmiege insgesamt gebildet, der hier in der Raumecke 2 sitzt.

Mit den Anlagelinealen 3, 4 ist ein Ausrichtsteg 6 gelenkig gekoppelt, der stets in der Winkelhalbierenden der Winkelschmiege liegt.

Das dargestellte und bevorzugte Ausführungsbeispiel zeigt, daß der Ausrichtsteg 6 als langgestreckter dritter Arm ausgeführt und mit seinem einen Ende nahe dem Winkelscheitel, nämlich hier am Schwenkgelenk 5 gelagert ist. An jedem der Anlagelineale 3, 4 ist mit erheblichem Abstand vom Winkelscheitel, hier also vom Schwenkgelenk 5, ein Koppelhebel 7; 8 mit einem Ende schwenkbar angelenkt. Die beiden Koppelhebel 7, 8 sind an ihren anderen Enden miteinander und mit dem Ausrichtsteg 6 gelenkig gekoppelt, und zwar an einem Koppelpunkt 9 am Ausrichtsteg 6. Zur Anpassung an einen bestimmten Winkel wie er hier von den beiden Wänden 1 an der Raumecke 2 gebildet wird ist der Koppelpunkt 9 am Ausrichtsteg 6 in dessen Längsrichtung verstellbar und in der jeweils erreichten Stellung fixierbar.

Insbesondere ist im dargestellten Ausführungsbeispiel der Koppelpunkt 9 als Rändelschraube auf einem Gewindebolzen ausgeführt. Hier gibt es natürlich konstruktiv viele andere Varianten, beispielsweise auch eine Flügelschraube oder einen Schnellspannhebel.

Bereits im allgemeinen Teil der Beschreibung ist darauf hingewiesen worden, daß man grundsätzlich die Verstellbarkeit des Koppelpunkts 9 am Ausrichtsteg 6 durch verschiedene Bohrungen am Ausrichtsteg 6 realisieren könnte. Dann gäbe es für den Koppelpunkt 9 nur verschiedene diskrete Positionen, die bestimmten, typischen Winkeln entsprechen. Das dargestellte Ausführungsbeispiel trägt jedoch der Tatsache Rechnung, daß die in der Praxis aufzunehmenden Winkel ganz beliebig ausfallen können. Dementsprechend empfiehlt es sich, daß der Koppelpunkt 9 am Ausrichtsteg 6 stufenlos verstellbar und fixierbar ist. Hier ist vorgesehen, daß der Ausrichtsteg 6 einen in Längsrichtung verlaufenden Schlitz 10 aufweist, in dem der Koppelpunkt 9 stufenlos verstellbar und fixierbar ist.

Das dargestellte und bevorzugte Ausführungsbeispiel zeigt an jedem Anlagelineal 3; 4 genau einen Anlenkpunkt 11 für den entsprechenden Koppelhebel 7; 8. Grundsätzlich wäre es aber auch möglich, mehrere Anlenkpunkte 11 in unterschiedlichen Abständen vom Schwenkgelenk 5 vorzusehen.

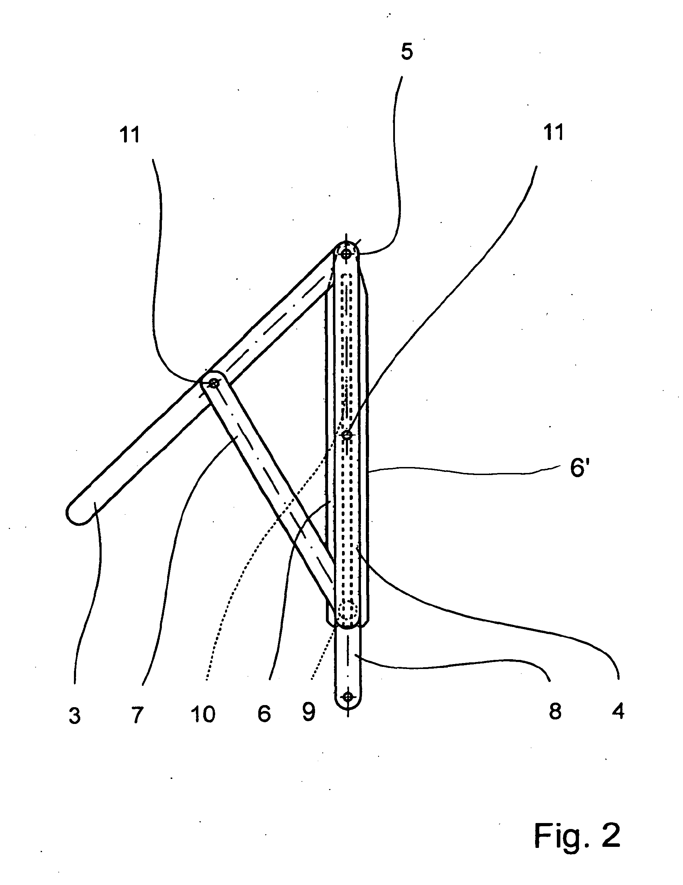

Das in Fig. 1 und 2 dargestellte Ausführungsbeispiel zeichnet sich ferner dadurch aus, daß die den beiden Anlagelinealen 3, 4 zugeordneten Koppelhebel 3, 8 gleich lang sind und in gleichen Abständen vom Winkelscheitel angelenkt sind. Auf diese Weise wird die exakte Lage des Ausrichtstegs 6 in der Winkelhalbierenden für alle Winkelstellungen der Anlagelineale 3, 4 zueinander sichergestellt.

Das dargestellte Ausführungsbeispiel erlaubt eine direkte mechanische Ausrichtung des Sägewerkzeugs, insbesondere des Kreissägeblattes, am Rand des Ausrichtsteges 6. Dazu ist vorgesehen, daß hier das zweite Anlagelineal 4, ohne Lösen der Fixierung des ersten Anlagelineals 3, mitsamt dem zugeordneten Koppelhebel 8 vom Koppelpunkt 9 lösbar ist. Das kann man dadurch realisieren, daß die hier dargestellte Rändelschraube am Koppelpunkt 9 tatsächlich nur das erste Anlagelineal 3 am Ausrichtsteg 6 fixiert, während der Koppelhebel 8 des zweiten Anlagelineals 4 hier nur lösbar "eingehängt" oder anderweitig verbunden ist. Unter Beibehaltung der Fixierung kann man daher den Koppelhebel 8 des zweiten Anlagelineals 4 aushängen und das Anlagelineal 4 samt Koppelhebel 8 nach innen auf den Ausrichtsteg 6 schwenken. Dadurch wird der zugeordnete Rand des Ausrichtstegs 6 frei zugänglich und kann seitlich an das Sägewerkzeug, insbesondere das Sägeblatt der Gehrungssäge angelegt werden. Gleichzeitig kann das fixierte erste Anlagelineal 3 an der Anschlagschiene einer Gehrungssäge angelegt werden, so daß sich genau die richtige Ausrichtung des Sägewerkzeugs relativ zur Anschlagschiene der Gehrungssäge und damit der richtige Gehrungswinkel ergibt.

Fig. 2 zeigt die zuvor geschilderte Anordnung der Winkelschmiege zur Übertragung des aufgenommenen Winkels auf die Gehrungssäge. Das Sägeblatt der Gehrungssäge kann rechts am Rand 6' des Ausrichtstegs 6 angelegt werden. Das geschieht dadurch, daß man zunächst das fixierte erste Anlagelineal 3 an der Anschlagschiene der Gehrungssäge anlegt. Dann dreht man den Drehteller der Gehrungssäge so, daß schließlich die Fläche des Sägeblattes des Sägeaggregates am rechten Rand 6' des Ausrichtstegs 6 anliegt.

Die relative Ausrichtung von Sägewerkzeug und Anschlagschiene an der Gehrungssäge wird auf unterschiedliche Art erreicht, sei es durch eine Verstellbarkeit der Anschlagschiene, sei es durch eine Verstellbarkeit des Sägeaggregates, beispielsweise mittels eines Drehtellers (DE-U-20 2006 012 418 und dort genannter Stand der Technik). Die erfindungsgemäße Winkelschmiege ist mit all diesen verschiedenen Gehrungssägen ohne weiteres einsetzbar.

Grundsätzlich ist es auch möglich, die Freigabe des Anlagelineals 4 mit dem Koppelhebel 8 auf andere Weise zu verwirklichen. Zum einen kann man das Anlagelineal 4 vom zugehörigen Koppelhebel 8 lösen und die beiden Hebel dann auf den Ausrichtsteg 6 zurückschwenken. Des weiteren kann man am Koppelhebel 8 eine Solltrennstelle 12 vorsehen, diese ist in Fig. 1 als Alternative gestrichelt angedeutet. Schließlich kann man auch das Anlagelineal 4 samt Koppelhebel 8 komplett von der Winkelschmiege lösen, wenn man die Konstruktion entsprechend ausgestaltet.

Das dargestellte Ausführungsbeispiel zeigt im übrigen, daß hier und nach bevorzugter Lehre der Ausrichtsteg 6 breiter ist als die Anlagelineale 3, 4 und die Koppelhebel 7, 8. Das gilt hier für beide Anlagelineale 3, 4 mit ihren Koppelhebeln 7, 8, sollte aber jedenfalls für das lösbare Anlagelineal 4 mit seinem Koppelhebel 8 gelten.

## Patentansprüche

1. Winkelschmiege als Hilfsmittel zum Einstellen eines Gehrungswinkels an einer Gehrungssäge,
mit einem ersten Anlagelineal (3) und einem zweiten Anlagelineal (4), das mit dem ersten Anlagelineal (3) an einem Ende vorzugsweise mittels eines Schwenkgelenkes (5) schwenkbar verbunden ist, so daß vom Überlappungsbereich der beiden Anlagelineale (3, 4) der Winkelscheitel der Winkelschmiege gebildet ist,
mit einem mit den Anlagelinealen (3, 4) gelenkig gekoppelten Ausrichtsteg (6), der stets in der Winkelhalbierenden der Winkelschmiege ausgerichtet ist,
wobei der Ausrichtsteg (6) als langgestreckter dritter Arm ausgeführt und einenends nahe dem Winkelscheitel, vorzugsweise auch am Schwenkgelenk (5), gelagert ist, und
mit zwei Koppelhebeln (7,8),
wobei an jedem Anlagelineal (3; 4) mit erheblichem Abstand vom Winkelscheitel ein Koppelhebel (7; 8) einenends schwenkbar angelenkt ist,
wobei die beiden Koppelhebel (7, 8) anderenends miteinander und mit dem Ausrichtsteg (6) an einem Koppelpunkt (9) gelenkig gekoppelt sind und
wobei der Koppelpunkt (9) zur Anpassung der Winkelschmiege an einen bestimmten Winkel am Ausrichtsteg (6) in dessen Längsrichtung verstellbar ist,
**dadurch gekennzeichnet,**
**daß** der Koppelpunkt (9) in seiner jeweiligen Stellung am Ausrichtsteg (6) fixierbar ist und **dadurch** auch über die Koppelhebel (7,8) die Anlagelineale (3,4) am Ausrichtsteg (6) fixierbar sind,
**daß** ein Anlagelineal (4), ohne Lösen der Fixierung des anderen Anlagelineals (3), vom zugeordneten Koppelhebel (8) lösbar ist oder mitsamt dem zugeordneten Koppelhebel (8) vom Koppelpunkt (9) lösbar ist oder mitsamt einem Teil des Koppelhebels (8) vom Rest des Koppelhebels (8) lösbar ist oder mitsamt dem zugeordneten Koppelhebel (8) komplett von der Winkelschmiege lösbar ist und
**daß** das gelöste Anlagelineal (4) und der gelöste Koppelhebel (8) bzw. dessen Teil so verlagerbar sind, daß der zugeordnete Rand (6') des Ausrichtsteges (6) frei zugänglich ist.

2. Winkelschmiege nach Anspruch 1, **dadurch gekennzeichnet,**
**daß** der Ausrichtsteg (6) breiter ist als die Anlagelineale (3, 4) und die Koppelhebel (7, 8), insbesondere breiter ist als das lösbare Anlagelineal (4) mit seinem Koppelhebel (8).

3. Winkelschmiege nach Anspruch 1 oder 2, **dadurch gekennzeichnet,**
**daß** der Koppelpunkt (9) am Ausrichtsteg (6) stufenlos verstellbar und fixierbar ist, insbesondere, daß der Ausrichtsteg (6) einen in Längsrichtung verlaufenden Schlitz (10) aufweist, in dem der Koppelpunkt (9) stufenlos verstellbar und fixierbar ist.

4. Winkelschmiege nach einem der Ansprüche 1 bis 3, **dadurch gekennzeichnet,**
**daß** an jedem Anlagelineal (3; 4) mehrere Anlenkpunkte (11) für den zugeordneten Koppelhebel (7; 8) in unterschiedlichen Abständen vom Winkelscheitel vorgesehen sind und der Koppelhebel (7; 8) wahlweise an jedem der Anlenkpunkte (11) anlenkbar ist.

5. Winkelschmiege nach einem der Ansprüche 1 bis 4, **dadurch gekennzeichnet,**
**daß** die den beiden Anlagelinealen (3; 4) zugeordneten Koppelhebel (7; 8) gleich lang sind und in gleichen Abständen vom Winkelscheitel, insbesondere vom Schwenkgelenk (5) angelenkt sind.

## Claims

1. Sliding bevel as an aid for setting a mitre angle on a mitre saw,
comprising a first locating straightedge (3) and a second locating straightedge (4) which is pivotably connected to the first locating straightedge (3) at one end preferably by means of a pivot joint (5), such that the angle vertex of the sliding bevel is formed by the overlapping region of the two locating straightedges (3, 4),
comprising an orientation web (6) which is coupled to the locating straightedges (3, 4) in an articulated manner and which is always oriented in the angle bisector of the sliding bevel,
wherein the orientation web (6) is designed as an elongated third arm and is mounted at one end close to the angle vertex, preferably also at the pivot joint (5), and
comprising two coupling levers (7, 8),
wherein a coupling lever (7; 8) is pivotably linked at one end to each locating straightedge (3; 4) at a considerable distance from the angle vertex,
wherein, at the other end, the two coupling levers (7, 8) are coupled in an articulated manner to one another and to the orientation web (6) at a coupling point (9), and
wherein the coupling point (9) is adjustable on the orientation web (6) in the longitudinal direction thereof for adapting the sliding bevel to a certain angle,
**characterized**
**in that** the coupling point (9) can be fixed in its respective position on the orientation web (6) and as a result the locating straightedges (3, 4) can also be fixed on the orientation web (6) via the coupling levers (7, 8),
**in that** one locating straightedge (4), without releasing the fixing of the other locating straightedge (3), can be released from the associated coupling lever (8) or can be released from the coupling point (9) together with the associated coupling lever (8) or can be released together with part of the coupling lever (8) from the rest of the coupling lever (8) or can be released completely from the sliding bevel together with the associated coupling lever (8), and
**in that** the released locating straightedge (4) and the released coupling lever (8) or the part thereof can be displaced in such a way that the associated edge (6') of the orientation web (6) is freely accessible.

2. Sliding bevel according to Claim 1, **characterized in that** the orientation web (6) is wider than the locating straightedges (3, 4) and the coupling levers (7, 8), in particular wider than the releasable locating straightedge (4) with its coupling lever (8).

3. Sliding bevel according to Claim 1 or 2, **characterized in that** the coupling point (9) is infinitely adjustable and can be fixed on the orientation web (6), in particular **in that** the orientation web (6) has a slot (10) which runs in the longitudinal direction and in which the coupling point (9) is infinitely adjustable and can be fixed.

4. Sliding bevel according to one of Claims 1 to 3, **characterized in that** a plurality of articulation points (11) for the associated coupling lever (7; 8) are provided on each locating straightedge (3; 4) at different distances from the angle vertex, and the coupling lever (7; 8) can be optionally linked to each of the articulation points (11).

5. Sliding bevel according to one of Claims 1 to 4, **characterized in that** the coupling levers (7; 8) assigned to the two locating straightedges (3; 4) are of equal length and are articulated at the same distances from the angle vertex, in particular from the pivot joint (5).

## Revendications

1. Equerre servant d'accessoire d'ajustement de l'angle d'onglet d'une scie à onglet,
présentant une première latte d'appui (3) et une deuxième latte d'appui (4) reliée à pivotement à une extrémité de la première latte d'appui (3), de préférence au moyen d'une articulation pivotante (5), de sorte que le sommet de l'angle de l'équerre soit formé par la zone de superposition des deux lattes d'appui (3, 4),
une traverse d'orientation (6) articulée sur les lattes d'appui (3, 4) et toujours orientée suivant la bissectrice de l'équerre,
la traverse d'orientation (6) étant configurée sous la forme d'un troisième bras allongé et étant montée à une extrémité à proximité du sommet de l'équerre, de préférence également sur l'articulation pivotante (5), et étant reliée à deux leviers d'accouplement (7, 8),
un levier d'accouplement (7; 8) étant articulé de manière pivotante à une extrémité de chaque latte d'appui (3, 4) à grande distance du sommet de l'équerre,
les deux leviers d'accouplement (7, 8) étant à leur autre extrémité articulés l'un à l'autre ainsi qu'à la traverse d'orientation (6) en un point d'accouplement (9),
la position en longueur du point d'accouplement (9) sur la traverse d'orientation (6) pouvant être ajustée pour adapter l'équerre à un angle défini,
**caractérisée en ce que**
chaque position du point d'accouplement (9) sur la traverse d'orientation (6) peut être fixée et ainsi les lattes d'appui (3, 4) peuvent être également fixées sur la traverse d'orientation (6) par l'intermédiaire des leviers d'accouplement (7, 8),
**en ce que** sans libérer la fixation de l'autre latte d'appui (3), une latte d'appui (4) peut être libérée du levier d'accouplement (8) qui lui est associé ou être libérée du point d'accouplement (9) en même temps que le levier d'accouplement (8) qui lui est associé, peut être libérée du reste du levier d'accouplement (8) en même temps qu'une partie du levier d'accouplement (8) ou peut être libérée complètement de l'équerre en même temps que le levier d'accouplement (8) qui lui est associé et
**en ce que** la latte d'appui (4) libérée et le levier d'accouplement (8) libéré ou leurs parties peuvent être déplacés de telle sorte que le bord (6') associé de la traverse d'orientation (6) soit librement accessible.

2. Equerre selon la revendication 1, **caractérisée en ce que** la traverse d'orientation (6) est plus large que les lattes d'appui (3, 4) et que le levier d'accouplement (7, 8) est en particulier plus large que la latte d'appui libérable (4) et que son levier d'accouplement (8).

3. Equerre selon les revendications 1 ou 2, **caractérisée en ce que** le point d'accouplement (9) sur la traverse d'orientation (6) peut être ajusté progressivement et fixé, et en particulier **en ce que** la traverse d'orientation (6) présente une fente (10) qui s'étend dans le sens de sa longueur et dans lequel le point d'accouplement (9) peut être ajusté progressivement et fixé.

4. Equerre selon l'une des revendications 1 à 3, **caractérisée en ce que** sur chaque latte d'appui (3; 4), plusieurs points d'articulation (11) pour le levier (7; 8) associé sont prévus à différentes distances du sommet de l'angle et **en ce que** le levier d'accouplement (7; 8) peut être articulé sélectivement en chacun des points d'articulation (11).

5. Equerre selon l'une des revendications 1 à 4, **caractérisée en ce que** le levier d'accouplement (7; 8) associé aux deux lattes d'appui (3; 4) ont la même longueur et sont articulés à des distances égales du sommet de l'angle et en particulier de l'articulation pivotante (5).
